# EUROPÄISCHE PATENTSCHRIFT

(11) **EP 3 868 947 B1**
(45) Veröffentlichungstag und Bekanntmachung des Hinweises auf die Patenterteilung: **09.10.2024**
(21) Anmeldenummer: 21153241.1
(22) Anmeldetag: 25.01.2021
(51) Int. Cl.: D06F 58/20, D06F 58/38, D06F 103/38, D06F 105/32, D06F 105/30, D06F 105/18

(54) **VERFAHREN ZUM BETRIEB EINES WASSERFÜHRENDEN HAUSHALTSGERÄTS UND WASSERFÜHRENDES HAUHALTSGERÄT**
WATER-CARRYING DOMESTIC APPLIANCE AND METHOD FOR OPERATING A WATER-CARRYING DOMESTIC APPLIANCE
PROCÉDÉ DE FONCTIONNEMENT D'UN APPAREIL ÉLECTROMÉNAGER À CIRCULATION D'EAU ET APPAREIL ÉLECTROMÉNAGER À CIRCULATION D'EAU

(30) Priorität: 18.02.2020 DE 102020201992
(43) Veröffentlichungstag der Anmeldung: 25.08.2021
(73) Patentinhaber: E.G.O. Elektro-Gerätebau GmbH, 75038 Oberderdingen (DE)
(72) Erfinder: Boss, Roland, 75015 Bretten (DE); Schaumann, Uwe, 75038 Oberderdingen (DE)
(74) Vertreter: Patentanwälte Ruff, Wilhelm, Beier, Dauster & Partner mbB

(56) Entgegenhaltungen:
- EP-A1- 0 345 510
- EP-A1- 1 283 293
- DE-A1- 19 642 164
- US-A1- 2017 160 011
- US-A1- 2018 282 934

## Beschreibung

### Anwendungsgebiet und Stand der Technik

Die Erfindung betrifft ein Verfahren zum Betrieb eines wasserführenden Haushaltsgeräts zum Trocknen von Gegenständen darin sowie ein entsprechendes Haushaltsgerät.

Aus der DE 10 2016 106 276 A1 ist ein Wäschetrockner bekannt, bei dem Luft durch eine Trommel als Behandlungskammer, in der feuchte Wäsche angeordnet wird, hindurchgeführt wird. Diese Luft wird aufgeheizt, bevor sie in die Trommel geführt wird, um so die Wäsche zu trocknen, da warme Luft mehr Feuchtigkeit aus der Wäsche aufnehmen kann als kalte Luft.

In der US 2017/0160011 A1 ist ein weiteres Verfahren zum Trocknen von Wäsche beschrieben, bei dem Unterdruck in einer Behandlungskammer erzeugt wird mittels einer Pumpe bzw. mittels eines Gebläses. Dabei wird die Behandlungskammer von Anfang an aufgeheizt, wozu ein Energie-Rückgewinnungssystem verwendet werden kann.

Aus der US 2018/282934 A1 ist auch ein Verfahren bekannt, um Wäsche kontrolliert zu trocknen, wobei Luft aus einer Behandlungskammer abgesaugt wird, in der die zu trocknende Wäsche ist. Durch das Absaugen wird gleichzeitig Luft in die Behandlungskammer eingesaugt, welche durch eine Heizung strömt, um aufgeheizt zu werden. Dabei werden Informationen über die Feuchtigkeit in der Wäsche gesammelt, um das Trocknungsverfahren zu steuern, insbesondere um zu hohe Temperaturen zu vermeiden und um die Wäsche zu schonen.

Bei dem Wäschetrockner der DE 196 42 164 A1 soll über einen Kanalabschnitt aufgeheizte Trockenluft in die Wäschetrommel eingebracht werden, die unter Umständen sogar heiß sein kann. Dabei ist der konstruktive Aufbau so, dass aufgrund eines zwingenden Kreislaufs und eines einzigen Gebläses stets die Behandlungskammer aufgeheizt werden muss, wenn Luft zirkuliert bzw. aus der Wäschetrommel abgsaugt wird.

Aus der EP 0 345 510 A1 ist ein Wäschetrockner bekannt mit verschiedenen Ventilklappen. Zu Beginn eines Trockenvorgangs kann eine Stellung von Ventilklappen so eingestellt werden, dass ein Gebläse zwar versucht, einen Unterdruck im Inneren des Trockners bzw. in einer Behandlungskammer zu erzeugen. Da Frischluft durch eine Ansaugöffnung und eine Einströmöffnung ungehindert nachströmen kann, ergibt sich faktisch aber kein Unterdruck. Des Weiteren wird die nachströmende Luft von Anfang an durch einen Wärmetauscher erwärmt.

Aus der EP 1 283 293 A1 ist ein nochmals weiterer Wäschetrockner bekannt, der eine horizontale rotierende Trommel aufweist, in der zu trocknende Wäsche ist. Mittels eines Lüfters wird während des Trocknens Luft aus einem Endbereich der Trommel in einem unteren oder sogar einem untersten Bereich der Trommel abgesaugt, während Luft, die durch eine Heizung aufgeheizt wird, an einem gegenüberliegenden Endbereich der Trommel angesaugt wird.

### Aufgabe und Lösung

Der Erfindung liegt die Aufgabe zugrunde, ein eingangs genanntes Verfahren sowie ein Haushaltsgerät zu dessen Durchführung zu schaffen, mit denen Probleme des Standes der Technik gelöst werden können und es insbesondere möglich ist, ein Trocknungsverfahren bzw. ein Betriebsverfahren schnell, effizient, energiesparsam und schonend für die zu trocknenden Gegenstände durchzuführen.

Gelöst wird diese Aufgabe durch ein Verfahren mit den Merkmalen des Anspruchs 1 sowie durch ein entsprechendes Haushaltsgerät mit den Merkmalen des Anspruchs 10. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Haushaltsgerät beschrieben. Sie sollen jedoch unabhängig davon sowohl für das Verfahren als auch für ein entsprechendes Haushaltsgerät selbstständig und unabhängig voneinander gelten können. Der Wortlaut der Ansprüche wird durch ausdrückliche Bezugnahme zum Inhalt der Beschreibung gemacht.

Bei dem Verfahren zum Betrieb eines wasserführenden Haushaltsgeräts wie eines Wäschetrockners oder einer Geschirrspülmaschine, in denen Gegenstände getrocknet werden sollen als Trocknungsverfahren, weist das Haushaltsgerät eine Behandlungskammer auf. In dieser Behandlungskammer sind die Gegenstände zu behandeln, insbesondere sollen sie darin getrocknet werden. Bei einem Haushaltsgerät wie einem Waschtrockner oder einer Geschirrspülmaschine werden die Gegenstände davor sogar in derselben Behandlungskammer mit Wasser gereinigt bzw. gewaschen. Das Haushaltsgerät weist eine Luftführung auf, die zu der Behandlungskammer hin bzw. in die Behandlungskammer hinein führt und von der Behandlungskammer weg bzw. aus der Behandlungskammer heraus führt. Des Weiteren weist das Haushaltsgerät eine Gebläsevorrichtung auf, die mit der genannten Luftführung verbunden ist, insbesondere darin angeordnet ist. Ein Teil der Luftführung geht von der Behandlungskammer weg zu der Gebläsevorrichtung. Des Weiteren geht von der Gebläsevorrichtung ein Teil der Luftführung weiter, vorteilhaft entweder wieder direkt zur Behandlungskammer hin, über eine Heizeinrichtung und/oder eine Entfeuchtungseinrichtung zu der Behandlungskammer oder aus dem Haushaltsgerät heraus. So kann die Gebläsevorrichtung zumindest Luft von der Behandlungskammer bzw. aus der Behandlungskammer absaugen, insbesondere möglichst feuchte Luft mit Feuchtigkeit bzw. Wasser von den zu trocknenden Gegenständen.

Erfindungsgemäß ist vorgesehen, dass zu Beginn eines Trocknungsverfahrens für die Gegenstände in der Behandlungskammer ein Unterdruck gegenüber dem Außendruck erzeugt wird. Ein solcher Unterdruck sollte also gegenüber dem Außendruck oder dem Normaldruck herrschen, der um das Haushaltsgerät herum herrscht. Dieser Unterdruck wird vorteilhaft durch Absaugen von Luft aus der Behandlungskammer erzeugt, wobei das Absaugen besonders vorteilhaft mittels der Gebläsevorrichtung erfolgt. Durch das Erzeugen eines Unterdrucks in der Behandlungskammer ist es möglich, das Verdampfen bzw. Verdunsten von Feuchtigkeit an oder in den Gegenständen zu beschleunigen. Grundsätzlich ist der Zusammenhang ja bekannt, dass durch Erzeugen eines Unterdrucks bzw. durch Absinken eines Drucks der Dampfdruck in dem Wasser bzw. den feuchten Gegenständen erhöht wird. Dadurch kann einfach mehr Wasser verdunstet werden. Ein Unterschied zwischen dem Unterdruck in der Behandlungskammer und dem Außendruck liegt erfindungsgemäß zwischen 20 mbar und 800 mbar, vorteilhaft zwischen 60 mbar und 500 mbar. Ein solcher Unterdruck wird besonders vorteilhaft dynamisch erzeugt, also durch permanentes Absaugen von Luft aus der Behandlungskammer. Ein Absaugen weist den Vorteil auf, dass dabei die Feuchtigkeit in der Luft innerhalb der Behandlungskammer abgesaugt wird und somit diese Feuchtigkeit auch tatsächlich aus der Behandlungskammer und somit von den Gegenständen weg entfernt wird.

In vorteilhafter Ausgestaltung der Erfindung ist es möglich, dass zu Beginn des Trocknungsverfahrens, insbesondere für eine Anfangs-Phase, keine Luft über die Luftführung oder auf andere Art und Weise in die Behandlungskammer eingeblasen wird, also aktiv eingebracht wird. Dies wäre an sich mittels der Gebläsevorrichtung möglich, soll hier aber gezielt unterlassen werden. Dann wird Luft, die mittels der Gebläsevorrichtung aus der Behandlungskammer abgesaugt wird, nach außen aus dem Gerät heraus oder in eine Entfeuchtungsvorrichtung in dem Haushaltsgerät eingeblasen, wo sie entfeuchtet wird, bevor dann die Luft vorteilhaft aus dem Haushaltsgerät ausgelassen wird. Die Luft soll also nicht zirkulieren wie sie es sonst vorteilhaft tut.

Dabei ist es möglich, dass Luft in die Behandlungskammer sozusagen eingelassen wird durch die Luftführung. Dies kann dadurch erfolgen, dass die Behandlungskammer oder die Luftführung in die Behandlungskammer hinein nicht hermetisch abgeschlossen sind. Dann erfolgt es sozusagen als Nebeneffekt und ungesteuert. Alternativ kann es gesteuert und gewollt erfolgen. Durch ein solches Einlassen von Luft in die Behandlungskammer kann erreicht werden, dass weiterhin Luft aus der Behandlungskammer abgesaugt wird mittels der Gebläsevorrichtung, wie vorstehend beschrieben worden ist. Dies wird als bedeutsam angesehen, damit verdunstete Feuchtigkeit aus der Behandlungskammer durch Absaugen entfernt werden kann. Ansonsten würden sich statische Druckverhältnisse einstellen ohne Absaugen von Luft aus der Behandlungskammer und somit ohne Entfernen von Feuchtigkeit aus der Behandlungskammer, was für das Trocknungsverfahren nachteilig wäre.

Bei der Erfindung wird während einer Anfangs-Phase des Trocknungsverfahrens für 30 Sekunden bis zu 10 Minuten nur mittels der Gebläsevorrichtung Luft aus der Behandlungskammer abgesaugt. Während dieses Absaugens wird entweder die Behandlungskammer nicht bewegt noch erfolgt ein Aufheizen der Behandlungskammer selbst oder der Luft für die Behandlungskammer. Damit kann die Abdichtung einer Öffnung zur Beladung des Gerätes in einfacher Weise realisiert werden, eine Dichtung kann also einfacher ausgebildet sein. Da bevorzugt keine Luft aktiv in die Behandlungskammer eingeblasen wird während dieser Zeit, wäre ein Beheizen solcher Luft für die Behandlungskammer ohnehin nicht zielführend. Wenn das Einblasen von Luft in die Behandlungskammer unterlassen wird, ist es besonders gut möglich und einfach möglich, den vorgenannten Unterdruck in der Behandlungskammer zu erzeugen und, insbesondere dynamisch, aufrechtzuerhalten.

In alternativer Ausgestaltung zu einer unbewegten Behandlungskammer ist es möglich, die Behandlungskammer relativ langsam zu bewegen. Dies kann erfolgen mit einer maximalen Drehzahl von 10 U/min, vorzugsweise maximal 2 U/min. Eine solche Bewegung kann entweder durch vollständiges bzw. kontinuierliches Rotieren als Bewegung erfolgen, alternativ durch eine teilweise Rotation mit der genannten Drehgeschwindigkeit entsprechend den vorgenannten Drehzahlen, beispielsweise auch als eine Art wiegende Bewegung hin und her, vorzugsweise um einen Drehwinkelbereich von nur 45° bis 180°.

Bei der Erfindung wird während der relativ kurzen Anfangs-Phase oder daran anschließend zwar Luft in die Behandlungskammer einzublasen, allerdings mit einem verringerten Volumenstrom als beim Absaugen. Dies kann beispielsweise durch eine Drossel erfolgen, wie nachfolgend noch näher erläutert wird.

In einer Weiterbildung der Erfindung ist es vorteilhaft möglich, dass Luft aus der Behandlungskammer in dem oberen Bereich oder in einer oberen Hälfte der Behandlungskammer abgesaugt wird. Hier sollten entsprechende Abluftöffnungen vorgesehen sein. Ist das Haushaltsgerät ein Wäschetrockner, bei dem die Behandlungskammer eine rotierende Trommel innerhalb eines Gehäuses ist, so ist auch hier vorteilhaft mindestens eine Abluftöffnung in der oberen Hälfte vorgesehen. Besonders vorteilhaft ist die mindestens eine Abluftöffnung in den obersten 10% der Behandlungskammer angeordnet bzw. zumindest jene Abluftöffnung, durch die während der vorgenannten Anfangs-Phase Luft mittels der Gebläsevorrichtung abgesaugt wird. Für spätere Phasen des Trocknungsverfahrens könnten auch noch weitere Abluftöffnungen vorgesehen und genutzt werden. Der Vorteil von solchen Abluftöffnungen im oberen Bereich oder sogar ganz oben in der Behandlungskammer liegt darin, dass dann Zuluftöffnungen im unteren Bereich der Behandlungskammer vorgesehen sein können. Auf diesen Zuluftöffnungen kann dann Wäsche als zu trocknende Gegenstände aufliegen, wodurch diese Zuluftöffnungen sozusagen selbsttätig teilweise, weitgehend oder ganz verschlossen werden. Dadurch ist das erfindungsgemäße Erzeugen eines Unterdrucks leichter und quasi selbsttätig möglich, nämlich durch die Wäsche selbst. Dabei kann vorgesehen sein, dass automatisch erkannt wird, wo die Abluftöffnungen und/oder wo die Zuluftöffnungen der Behandlungskammer gerade angeordnet sind. Die Behandlungskammer kann dabei mittels eines Antriebsmotors und entsprechenden Lagesensoren so gedreht werden, dass die Zuluftöffnungen ganz unten bzw. die Abluftöffnungen ganz oben angeordnet sind, wenn das Trocknungsverfahren beginnt.

Bei der Erfindung ist vorgesehen, dass Luft in die Behandlungskammer mittels mindestens einer Zuluftöffnung im unteren Bereich oder in der unteren Hälfte der Behandlungskammer einströmt. Dabei kann die Luft entweder eingelassen werden, also von selbst nachströmen, insbesondere aufgrund des Unterdrucks in der Behandlungskammer, oder mittels der Gebläsevorrichtung eingeblasen werden. Hier kann vorteilhaft vorgesehen sein, dass während einer vorgenannten Anfangs-Phase des Trocknungsverfahrens Luft von alleine in die Behandlungskammer einströmt, vorteilhaft durch die genannte Zuluftöffnung, natürlich verstärkt durch den Unterdruck in der Behandlungskammer. In einer späteren Phase des Trocknungsverfahrens kann dann mittels der Gebläsevorrichtung Luft eingeblasen werden, also gezielt und ggf. mit hohem Volumenstrom. Eine solche Zuluftöffnung liegt vorteilhaft sogar in dem untersten Bereich bzw. in den untersten 10% der Behandlungskammer. Dadurch ist es möglich, wie zuvor angesprochen worden ist, dass Wäsche in einem Wäschetrockner als Haushaltsgerät die Zuluftöffnung oder mehrere Zuluftöffnungen in diesem untersten Bereich sozusagen selbsttätig abdeckt und somit teilweise oder weitgehend verschließt. Dann brauchen keine anderen Maßnahmen ergriffen zu werden, um die Zuluftöffnung weitgehend oder ganz zu verschließen.

Es ist erfindungsgemäß vorgesehen, dass ganz zu Beginn des Trocknungsverfahrens, also in der vorgenannten Anfangs-Phase, Luft mittels der Gebläsevorrichtung aus der Behandlungskammer abgesaugt wird und dabei die zu trocknenden Gegenstände, die insbesondere im Fall von Wäsche feucht sind, schwer sind und relativ gut dichtend aufeinanderliegen, Prallhindernisse bilden. So kann ein Einströmen von Luft in die Behandlungskammer erschwert oder zumindest abgebremst werden. Dabei sind die zu trocknenden Gegenstände massiv oder konzentriert nahe bei mindestens einer Zuluftöffnung angeordnet, und können diese Zuluftöffnung in einem Übergangsbereich in das Innere der Behandlungskammer zumindest teilweise abdecken. So kann das Nachströmen von Luft in die Behandlungskammer erschwert oder verringert werden, was das erfindungsgemäße Erzeugen eines Unterdrucks in der Behandlungskammer unterstützt. Dies ist vor allem dann vorteilhaft, wenn das Haushaltsgerät ein Wäschetrockner ist und die zu trocknenden Gegenstände Wäschestücke sind. Dann kann auch vorgesehen sein, dass ein Bewegen der Behandlungskammer nur sehr geringfügig durchgeführt wird oder sogar unterbleibt, alternativ derart durchgeführt wird, dass sich eine Trommel als Behandlungskammer einmal um 360° dreht oder nur teilweise dreht und dann wieder in derselben Drehposition ankommt bzw. verharrt wie davor. Dann ist es möglich, dass die sich unten sammelnden feuchten Wäschestücke wiederum die Zuluftöffnungen ganz oder weitgehend abdecken, damit möglichst wenig Zuluft nachströmt.

In weiterer Ausgestaltung der Erfindung kann in der Luftführung hin zu der Behandlungskammer ein Drosselventil vorgesehen sein. Ein solches Drosselventil kann sehr gezielt eine Luftzufuhr in die Behandlungskammer beeinflussen bzw. einstellen, insbesondere in gezieltem Maß. Dies bietet sich vor allem auch dann an, wenn Luft in die Behandlungskammer im Wesentlichen oder ausschließlich nur über die Luftführung einströmen kann. Dann ist eine Regelung mittels des Drosselventils besonders gut möglich. Ein Abstand eines Drosselventils zur Behandlungskammer kann maximal 5 cm bis 50 cm zu einer Zuluftöffnung von der Luftführung in die Behandlungskammer betragen. Durch einen solchen geringen Abstand wird eine Regelung der Luftzufuhr möglichst nahe an der Behandlungskammer erreicht.

In Ausgestaltung der Erfindung kann vorgesehen sein, dass der Schritt die Anfangs-Phase des Trocknungsverfahrens, bei dem ein vorgenannter relativer Druckunterschied zwischen dem Unterdruck in der Behandlungskammer und dem Außendruck hergestellt wird, bis zu 5 Minuten dauert. In weiterer Ausgestaltung der Erfindung kann vorgesehen sein, dass nach dieser Anfangs-Phase bzw. dieser Dauer kein relativer Druckunterschied mehr erzeugt wird bzw. ein Druckunterschied geringer als 50 mbar erzeugt wird, insbesondere geringer ist als 20 mbar. Dann ist es insbesondere möglich, eine oder mehrere Zuluftöffnungen in die Behandlungskammer vollständig zu öffnen, so dass Luft möglichst gut nachströmen kann in die Behandlungskammer. Vorteilhaft kann vorgesehen sein, dass Luft mittels der Gebläsevorrichtung über die Luftführung in die Behandlungskammer eingeblasen wird, wobei dann eine Luftführung möglichst frei sein sollte. Des Weiteren kann möglicherweise sogar ein Überdruck in der Behandlungskammer erzeugt werden, zumindest ein leichter Überdruck.

In Weiterbildung der Erfindung ist es möglich, dass der relative Druckunterschied zwischen dem Unterdruck in der Behandlungskammer und dem Außendruck in der vorgenannten Anfangs-Phase des Trocknungsverfahrens solange durchgeführt wird, bis eine durchschnittliche Feuchte der zu trocknenden Gegenstände um 5% bis 25% reduziert worden ist. Insbesondere kann sie um 7% bis 15% reduziert worden sein. Dabei kann vorgesehen sein, wie zuvor beschrieben worden ist, dass danach kein Druckunterschied mehr erzeugt wird oder nur ein relativ geringer Druckunterschied erzeugt wird. Dieser Druckunterschied liegt dann im Wesentlichen in der Art der Luftführung und des Betriebs der Gebläsevorrichtung begründet, ist aber nicht mehr zielgerichtet erzeugt, um dadurch den Dampfdruck der Feuchtigkeit in den Gegenständen zu beeinflussen.

Alternativ zu den vorbeschriebenen Möglichkeiten kann auch vorgesehen sein, dass in einem Dauerbetrieb des Haushaltsgeräts, der an die vorgenannte Anfangs-Phase zu Beginn des Trocknungsverfahrens anschließt, vorteilhaft direkt anschließt, ein relativer Druckunterschied in der Behandlungskammer zwischen dem Unterdruck darin und dem Außendruck außen herum eingehalten bzw. aufrechterhalten wird, der aber geringer ist als zuvor. Ein solcher Druckunterschied kann mindestens 10 mbar oder mindestens 100 mbar betragen, vorzugsweise bis zu 200 mbar. Insbesondere kann er um nur 10% bis 50% unterschiedlich sein zu dem Druckunterschied in der Anfangs-Phase des Trocknungsverfahrens.

In dem Fall, dass das erfindungsgemäße Haushaltsgerät eine Geschirrspülmaschine ist, wird vor dem Trocknungsverfahren ein Reinigen von Geschirr durchgeführt, insbesondere ein Geschirrspülvorgang. Erst an dessen Ende wird das Geschirr in der Behandlungskammer getrocknet. Hierbei ist leicht erkennbar, dass der vorgenannte Aspekt, wie er für einen Wäschetrockner oder Waschtrockner vorteilhaft gelten kann hinsichtlich Bewegen der Behandlungskammer und Bewegen der Gegenstände darin, hier nicht möglich ist. Dafür ist es leichter, eine Luftzufuhr in die Behandlungskammer mittels eines vorgenannten Drosselventils, das steuerbar sein kann, gezielt in gewünschtem Maß zu beeinflussen. So kann ein Trocknungsverfahren sehr gut und gezielt gesteuert werden für ein gewünschtes optimales Ergebnis.

In dem Fall eines Wäschetrockners oder eines Waschtrockners als erfindungsgemäßes Haushaltsgerät kann eine Trommelaufnahme für eine übliche drehbare Trommel die Behandlungskammer bilden. Eine vorgenannte Abluftöffnung der Luftführung, die von der Behandlungskammer weg führt, ist dann vorteilhaft im oberen Bereich dieser Behandlungskammer angeordnet. Insbesondere ist sie in der oberen Hälfte der Behandlungskammer oder sogar in den oberen 10% der Behandlungskammer angeordnet.

Eine Zuluftöffnung der Luftführung hin zu der Behandlungskammer bzw. in die Behandlungskammer hinein ist bevorzugt in der unteren Hälfte der Behandlungskammer angeordnet, besonders bevorzugt ganz unten bzw. in den untersten 10% oder 20% der Behandlungskammer. Ist hier ein Abstand zwischen der drehbaren Trommel und der festen Trommelaufnahme gering, so würde Luft versuchen, wenn sie im untersten Bereich in die Aufnahme einströmt, durch entsprechende Trommelöffnungen in die Trommel einzuströmen. Dies wird aber durch die darauf aufliegende Wäsche erschwert oder verhindert, so dass die Luft im Spaltraum des schmalen Abstands zwischen Trommel und Trommelaufnahme einen längeren Weg zurücklegen muss, bis sie in die Trommel einströmen kann. Dies ermöglicht das erfindungsgemäße Erzeugen eines Unterdrucks, wenn oben aus der Trommel und der sie umgebenden Trommelaufnahme als Behandlungskammer Luft mittels der Gebläsevorrichtung abgesaugt wird.

Weist ein vorgenannter Wäschetrockner oder Waschtrockner keine gehäuseartig ausgebildete Trommelaufnahme für die Trommel auf, sondern nur eine Art Wanne im unteren Bereich oder unterhalb der Trommel, so kann für die Wanne hinsichtlich der Luftzufuhr oder einer Zuluftöffnung dasselbe gelten.

Es ist möglich, dass ein Abstand des Drosselventils von einer Zuluftöffnung bzw. der Behandlungskammer selbst geringer als 20 cm entlang der Luftführung, der Weg also kürzer ist als 20 cm, insbesondere sogar kürzer ist als 10 cm. Dann kann es direkter wirken.

In vorteilhafter weiterer Ausgestaltung der Erfindung weist das Haushaltsgerät eine Heizeinrichtung auf, um Luft aufzuheizen, bevor sie über die Zuluftöffnung in die Behandlungskammer einströmt bzw. nachströmt oder eingeblasen wird. Dies gilt dann vor allem für eine Phase des Trocknungsverfahrens der Gegenstände nach der erfindungsgemäßen Anfangs-Phase, wenn also Luft mit einer bestimmten Luftströmung oder einem gewissen Luftvolumen in die Behandlungskammer eingeblasen wird. Nur dann ist ein kontrollierbarer Vorgang möglich. Eine Heizeinrichtung ist vorteilhaft in der Luftführung zwischen Gebläsevorrichtung und Behandlungskammer angeordnet, wie dies an sich aus dem Stand der Technik bekannt ist. Die Art der Beheizung kann vorteilhaft aus bekannten Möglichkeiten ausgewählt werden.

In weiterer Ausgestaltung der Erfindung weist die Trommel bei einem Wäschetrockner als erfindungsgemäßes Haushaltsgerät, wenn sie in einer gehäuseartigen Trommelaufnahme angeordnet ist, nicht entlang der gesamten Mantelfläche oder äußeren Fläche hinweg Öffnungen auf. Vorteilhaft sind diese nur in einem oder zwei Mantelflächenbereichen vorgesehen, wobei sich solche Mantelflächenbereiche bevorzugt jeweils über einen Umfangswinkel von 10° bis 60° oder bis 90° erstrecken. In einer Anfangs-Phase zu Beginn des erfindungsgemäßen Trocknungsverfahrens ist eben die Trommel derart in einer Drehstellung angeordnet, dass ein genannter Mantelflächenbereich mit Öffnungen den untersten Bereich der Trommel bildet. Diese Öffnungen können dann von den feuchten Wäschestücken sehr wirkungsvoll abgedeckt werden. Ist ein zweiter Mantelflächenbereich mit Öffnungen vorgesehen, so ist er vorteilhaft am gegenüberliegenden Bereich oder oberen Bereich der Trommel angeordnet. An diesen Öffnungen kann dann sehr gut die Luft abgesaugt werden.

In weiterer vorteilhafter Ausgestaltung der Erfindung kann die Gebläsevorrichtung entlang der Luftführung näher an der Absaugöffnung aus der Behandlungskammer als an der Zuluftöffnung in die Behandlungskammer hinein angeordnet sein. Vorteilhaft kann sie um mindestens 10% näher dort angeordnet sein, insbesondere um 20% bis 50% näher. So kann vor allem bewirkt werden, dass die Gebläsevorrichtung für das Absaugen besser optimiert ist als für das Einblasen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische geschnittene Seitenansicht eines erfindungsgemäßen Wäschetrockners mit einer Trommelaufnahme und einem Drosselventil in einer Zuluftöffnung dafür,
- Fig. 2: eine Schnittdarstellung senkrecht zur Mittellängsachse der Trommelaufnahme mit Darstellung der Verteilung von Öffnungen in eine Trommel innerhalb der Trommelaufnahme und
- Fig. 3: eine Abwandlung ähnlich Fig. 2 ohne Drosselventil an einer Zuluftöffnung und mit wenigen, speziell verteilten Öffnungen in der Trommel.

### Detaillierte Beschreibung der Ausführungsbeispiele

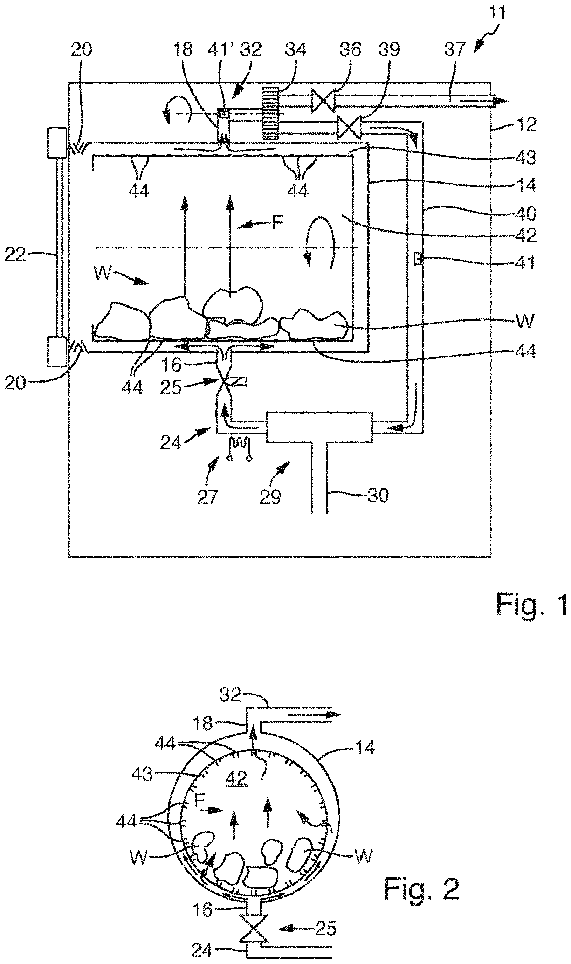

In den Fig. 1 und 2 ist ein erfindungsgemäßer Wäschetrockner 11 in seitlicher Schnittansicht dargestellt. Er weist ein Gehäuse 12 und darin eine Trommelaufnahme 14 auf, die nach links offen ist. Die Trommelaufnahme 14 ist vorteilhaft in etwa rundzylindrisch ausgebildet, wie dies nachfolgend aus der Querschnittsdarstellung der Fig. 2 zu ersehen ist. Von unten mündet in die Trommelaufnahme 14 eine Zuluftöffnung 16 mit einem Drosselventil 25 daran. An das Drosselventil 25 führt von unten eine Hin-Luftführung 24. Oben, vorteilhaft gegenüber der Zuluftöffnung 16, ist eine Abluftöffnung 18 an der Trommelaufnahme 14 vorgesehen. Nach links zum Gehäuse 20 hin ist die Trommelaufnahme 14 mittels einer Dichtung 20 abgedichtet. Eine übliche Tür 22 erlaubt das Beladen und Entladen. Die Trommelaufnahme 14 kann etwas bewegbar oder federnd im Gehäuse 12 gelagert sein, was aber im Stand der Technik bekannt ist.

Das Drosselventil 25 kann als sehr einfaches Schieberventil ausgebildet sein, da es keinen hohen mechanischen Belastungen oder starken Drücke standhalten muss. Alternativ kann es als Kugelventil oder anderes geeignetes Ventil ausgebildet sein. An der Hin-Luftführung 24 ist eine Heizung 27 stark vereinfacht dargestellt, um zugeführte Luft zu beheizen für eine zweite bzw. späte Phase eines Trocknungsverfahrens im Wäschetrockner 11. Vor der Heizung 27 ist eine Kondensationseinheit 29 angeordnet, in der auf bekannte Art und Weise zugeführte feuchte Luft entfeuchtet werden kann. Das Wasser aus der Kondensationseinheit 29 wird durch einen Wasserauslass 30 abgeführt und kann entweder in eine Abwasserleitung gehen oder, alternativ, in einen entnehmbaren Behälter.

Oben an der Trommelaufnahme 14, die der eingangs genannten Behandlungskammer entspricht, schließt sich an die Abluftöffnung 18 eine Ab-Luftführung 32 an. Sie führt zu einem Lüfter 34, wobei der Abstand des Lüfters 34 zur Trommelaufnahme 14 vorteilhaft weniger als 50 cm betragen kann, vorzugsweise weniger als 30 cm. Der Lüfter 34 kann ein üblicher Lüfter sein, wie er in Wäschetrocknern bekanntermaßen verwendet wird, beispielsweise als Radiallüfter oder Walzenlüfter.

Hier ist der Lüfter 34 mit zwei dahinter geschalteten Ventilen dargestellt, nämlich mit einem Auslassventil 36 an einen Auslass 37 aus dem Wäschetrockner 11 hinaus und mit einem Umluftventil 39 an eine Umluft-Luftführung 40. Das Auslassventil 36 und das Umluftventil 39 sollten jeweils abwechselnd betätigt werden, so dass eines geöffnet ist während das andere geschlossen ist und anders herum. Alternativ könnte hinter dem Lüfter 34 ein Zwei-Wege-Ventil vorgesehen sein, welches entweder an den Auslass oder an die Umluft-Luftführung geht zum Führen der vom Lüfter ausgeblasenen bzw. aus der Trommelaufnahme 14 abgesaugten Luft.

Die Umluft-Luftführung 40 geht auf bekannte Art und Weise zu der Kondensationseinheit 29 und führt dieser feuchte Luft aus dem Inneren der Trommelaufnahme 14 bzw. von Wäschestücken W darin zu. In der Umluft-Luftführung 40 ist beispielhaft ein Sensor 41 dargestellt. Er kann beispielsweise die Luftfeuchtigkeit in der darin entlang geführten Luft erfassen zur Steuerung des Trocknungsverfahrens. Wird keine Luftfeuchtigkeit mehr festgestellt, so kann das Trocknungsverfahren beendet werden.

Eine alternative und vorteilhafte Anbringungsmöglichkeit für einen Sensor 41' ist oben in der Ab-Luftführung 32 kurz hinter der Abluftöffnung 18. Dieser Sensor 41' kann ebenfalls ein Sensor für Luftfeuchtigkeit sein, zusätzlich oder alternativ kann ein Luftdrucksensor vorgesehen sein. Darauf wird nachfolgend noch näher eingegangen.

In der Trommelaufnahme 14 befindet sich eine drehbare Trommel 42, die in einer ersten grundsätzlichen Ausgestaltung der Erfindung ausgebildet sein kann wie aus dem Stand der Technik bekannt. Sie weist eine umlaufende Trommelmantelwand 43 auf, in der auf bekannte Art und Weise zahlreiche Öffnungen 44 vorgesehen sind, und zwar entlang der gesamten Trommelmantelwand. Dies ist auch aus der anderen Schnittdarstellung der Fig. 2 zu ersehen.

In der Trommel 42 befinden sich Wäschestücke W, die von einem vorhergehenden Waschvorgang stammen, also nass bzw. sehr feucht sind. Aus ihnen steigt eine gewisse Feuchtigkeit F auf, die schematisch dargestellt ist.

Für ein erfindungsgemäßes Trocknungsverfahren mit dieser Ausgestaltung wird die Trommel 42 mit der feuchten Wäsche W beladen bei geöffneter Tür 22 und diese dann geschlossen, wobei sie aufgrund der Dichtung 20 luftdicht geschlossen ist. Dann startet das Trocknungsverfahren. Dazu werden das Drosselventil 25 geschlossen und der Lüfter 34 aktiviert zum Absaugen von Luft über die Ab-Luftführung und die Abluftöffnung 18 aus der Trommelaufnahme 14 und der Trommel 42. Das Umluftventil 39 ist dabei geschlossen, das Auslassventil 36 ist geöffnet. Abgesaugte Luft wird also zum Auslass 37 aus dem Wäschetrockner 11 ausgeblasen bzw. ausgelassen. Aufgrund des dichten Verschließens der Trommelaufnahme 14 nach links mittels Dichtung 20 und Tür 22, und weil das Drosselventil 25 geschlossen ist, entsteht durch das Absaugen des Lüfters 34 ein Unterdruck in der Trommelaufnahme 14 und somit auch der Trommel 42, also an den Wäschestücken W. Abhängig von der Leistung des Lüfters 34 kann dieser Unterdruck unterschiedlich sein wie eingangs genannt, beispielsweise dynamisch um 200 mbar bis 500 mbar unter dem Außendruck liegen, also bei 0,5 bar bis 0,8 bar liegen. Durch diesen Unterdruck sinkt der Siedepunkt des Wassers als Feuchtigkeit in der Wäsche W, was somit auch ohne Erhöhung der Temperatur in der Trommel 42 durch an sich übliches Heizen zu einem verstärkten Verdunsten des Wassers führt. Je stärker der Unterdruck bzw. je geringer der Druck innerhalb der Trommel 42, desto stärker kann Wasser bzw. Feuchtigkeit F aus der Wäsche W verdunsten und dabei gleichzeitig vom Lüfter 34 abgesaugt und zum Auslass 37 aus dem Wäschetrockner 11 herausgeblasen werden. Schließlich wird hier der Dampfdruck in dem Wasser abgesenkt. Bei diesem Trocknungsschritt wird die Trommel 42 nicht bewegt bzw. nicht gedreht um die vorgenannte Dichtheit einfacher zu gewährleisten.

Mittels des Sensors 41' kann entweder der Druck erfasst werden, der dann auch innerhalb der Trommel 42 gilt. Alternativ kann mittels eines Luftfeuchtigkeitssensors der Feuchtigkeitsgehalt dieser Luft erfasst werden. Bei bestimmten vorgegebenen Grenzwerten bzw. wenn diese unterschritten werden kann das Unterdruck-Trocknen beendet werden. Alternativ kann es für 5 Minuten bis 10 Minuten durchgeführt werden. Dann kann durch Aufheizen der zugeführten Luft getrocknet werden. Möglicherweise kann auch während eines anschließenden konventionellen Trocknens ein Unterdruck in der Trommel 42 aufrechterhalten werden, beispielsweise um 100 mbar geringer als ein Außendruck. Dann wird auch in dieser Zeit der Dampfdruck in dem Wasser abgesenkt für ein leichteres Verdunsten. Ebenso ist es möglich, während der Anfangs-Phase des Trocknens hauptsächlich mit Unterdruck zwischendurch kurz zugeführte Luft aufzuheizen um im Inneren der Trommel die Temperatur etwas zu erhöhen, was das Trocknen verbessert. Das kann genutzt werden für eine stärkere Durchlüftung der Trommel, beispielsweise mit Öffnen des Drosselventils 25.

Während dieses Beginns des Trocknungsverfahrens ist es möglich, die Trommel 42 einmal oder mehrfach oder für kurze Zeit unterhalb von 1 Minute zu drehen. Dadurch können die Wäschestücke W vermischt bzw. aufgelockert werden, wodurch feuchtere Bereiche an die Außenseite gelangen, damit auch von hier mehr Feuchtigkeit verdunstet und abgeführt werden kann. Alternativ kann ein Bewegne der Trommel 42 unterbleiben.

Des Weiteren ist es möglich, für kurze Zeit das Drosselventil 25 zu öffnen, um sozusagen frische Luft in die Trommel 42 einzulassen. Dies reduziert den Unterdruck zwar deutlich, zumindest für kurze Zeit, kann aber dadurch unterstützend wirken, dass ein gewisser Luftstrom entsteht, der schließlich durch die trockene nachströmende Luft eine erhöhte Aufnahme von Luftfeuchtigkeit ermöglicht, welche dann eben wieder vom Lüfter 34 zum Auslass 37 herausgeblasen werden kann. Es kann auch vorgesehen sein, dass das Drosselventil 25 nicht vollständig geschlossen wird, sondern auf einen sehr geringen Durchlassquerschnitt eingestellt wird, welcher dann wiederum diesen Zustand auf Dauer einstellt und beibehält. Deswegen kann hier auch ein vorgenanntes relativ einfaches Schieberventil ausreichen, welches ohnehin keine vollständige Dichtwirkung aufweist bzw. aufweisen muss. Dies wird aber nicht als Einblasen von Luft in die Trommel 42 angesehen.

In einer einfachen Ausgestaltung der Erfindung kann der Lüfter 34 eben mit nominaler Leistung arbeiten losgelöst davon, welche Druckverhältnisse und welche Feuchtigkeitsverhältnisse in der Trommel 42 tatsächlich herrschen. In der zuvor beschriebenen etwas aufwendigeren Variante kann dies durch Sensoren, wie beispielsweise den Sensor 41', mit Vorgabewerten geregelt erfolgen. So kann der Lüfter 34 derart angesteuert werden, dass er einen bestimmten vorgegebenen Unterdruck in der Trommel 42 erzeugt und hält, welcher für ein Trocknungsverfahren als vorteilhaft bestimmt worden ist.

Die Dauer dieser ersten Phase des Trocknungsverfahrens kann entweder fest vorgegeben sein und beispielsweise 10 Minuten bis 20 Minuten betragen, möglicherweise auch kürzer wie eingangs genannt. Alternativ kann vorgesehen sein, dass ein bestimmter Unterdruck in der Trommel 42 erzeugt und möglichst aufrechterhalten wird. Dazu kann ein vorbeschriebener Luftdrucksensor 41 ` dienen. Dies kann solange erfolgen, bis ein Luftfeuchtigkeitssensor 41' das Unterschreiten eines bestimmten vorgegebenen Wertes feststellt, was bedeutet, dass durch das Trocknen der Wäsche W mit Unterdruck nicht mehr so viel Feuchtigkeit herausgezogen werden kann, wie am Anfang bzw. dass das Verfahren im Vergleich zum Energieaufwand und vor allem zur Dauer ineffizient wird. Dann ist es möglich, dieses Trocknungsverfahren mit Unterdruck zu beenden und ein quasi normales Trocknungsverfahren zu beginnen mit permanentem Rotieren der Trommel 42, Öffnen des Drosselventils 25 und Arbeiten im Umluftbetrieb mittels des Umluftventils 39, der Umluft-Luftführung 40 und vor allem der Kondensationseinheit 29 zum Entziehen des Wassers.

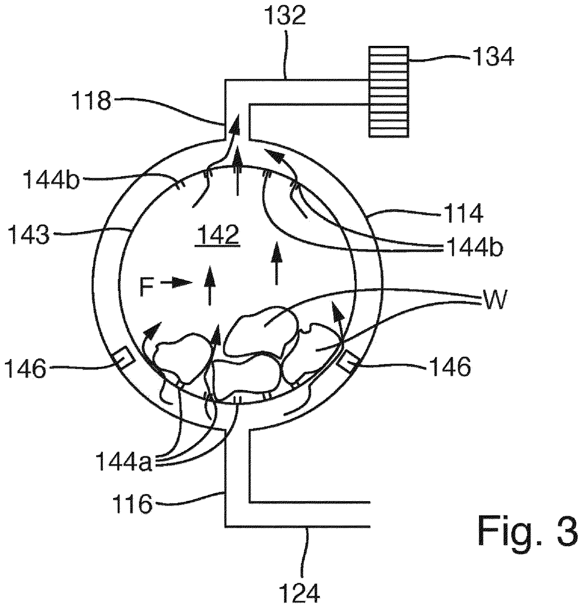

In der Fig. 3 ist als zweite grundsätzliche Ausgestaltung für einen Wäschetrockner dargestellt, bei der eine Trommelaufnahme 114 nach unten eine Zuluftöffnung 116 aufweist, allerdings ohne Drosselventil, also sozusagen einfach geöffnet ist. Oben an der Trommelaufnahme 114 ist wie bei Fig. 2 eine Abluftöffnung 118 samt Ab-Luftführung 132 zu dem Lüfter 134 vorgesehen. In der Trommelaufnahme 114 ist eine Trommel 142 mit einer umlaufenden rundzylindrischen Trommelmantelwand 143 vorgesehen. Diese weist zwar auch einige Öffnungen 144 auf, allerdings deutlich weniger als die Trommel 42 der Fig. 2. Die Trommel 142 weist in einem tief unteren Bereich Öffnungen 144a auf und in einem weit oberen Bereich Öffnungen 144b. Dies können auf eine vertikale Höhenachse bezogen jeweils die untersten 10% bis 20% und die obersten 10% bis 20% sein. Auf einen Umfangswinkel der Trommelmantelwand 143 bezogen können die Öffnungen 144a und 144b direkt einander gegenüberliegend Winkelbereiche von 45° bis 90° Umfangswinkel bedecken, vorteilhaft zwischen 50° und 70° Umfangswinkel.

Ein nicht dargestellter Antrieb für die Trommel 142 kann die Lage der Trommel 142 hinsichtlich der Position der Öffnungen 144a und 144b genau erkennen. Dies ist leicht möglich über entsprechende Inkrementalgeber odgl. an einem Antriebsmotor und/oder an der Trommel 142 selbst. So kann während einer ersten Phase des Trocknungsverfahrens mit Unterdruck vorgesehen sein, dass die Trommel 142 stets in einer der Fig. 3 entsprechenden Drehstellung angehalten wird, so dass die einen Öffnungen 144a maximal weit unten liegen, und die anderen Öffnungen 144b maximal weit oben liegen. Wichtig ist vor allem die Positionierung der unteren Öffnungen 144a. Dadurch kann erreicht werden, dass diese unteren Öffnungen 144a von Wäschestücken W weitgehend oder vollständig abgedeckt und somit quasi verschlossen werden. Das kann dann als eine Art Drossel wirken bzw. eine Art Prallhindernisse für Luft bilden, die durch die darunterliegenden und abgedeckten Öffnungen 144a in die Trommel 142 einzuströmen versucht. Dies kann also auch ohne Drosselventil zur Entstehung eines gewissen Unterdrucks in der Trommel 142 bei Absaugen von Luft mittels eines Lüfters 134 führen. Somit muss in der Zu-Luftführung 124 an die Zuluftöffnung 116 eben kein Drosselventil vorgesehen sein, außerdem braucht keine Ansteuerung dafür vorgesehen sein.

Es können Dichtungen 146 zwischen Trommelaufnahme 114 und Trommelmantelwand 143 vorgesehen sein. So kann verhindert werden, dass ein signifikanter Anteil von Luft zwischen Trommelaufnahme 114 und Trommelmantelwand 143 entlangströmt, wodurch zum einen keine verstärkte Luftströmung an den Wäschestücken W vorbei erzeugt werden könnte und zum anderen auch kein nennenswerter Unterdruck in der Trommel 142 erzeugt werden könnte. Die Dichtungen 146 können entweder innen an der Trommelaufnahme 114 oder außen an der Trommelmantelwand 143 vorgesehen sein. Sie sollten kurz vor dem jeweils anderen gegenüberliegenden Teil enden, da ansonsten die Reibung bei drehender Trommel 142 zu groß werden könnte mit resultierendem starkem Verschleiß. Dies ist nicht gewünscht. Möglicherweise kann auch eine entsprechend reibungsarme Dichtung 146 verwendet werden, dann könnte sie auch anliegen.

Durch diese Dichtungen 146 kann Luft durch die offene Zuluftöffnung 116 und Zu-Luftführung 124 nur durch die unteren Öffnungen 144a weiterströmen und nicht weiter zwischen Trommelaufnahme 114 und Trommelmantelwand 143 nach oben zu den oberen Öffnungen 144b. Diese werden aber von der Wäsche W überdeckt bzw. bedeckt. Somit kann hier nur wenig Luft nachströmen, aber möglicherweise, abhängig von der Leistung des Lüfters 134, gerade so viel, dass sich ein gewünschter Unterdruck dauerhaft einstellt. Des Weiteren kann als Vorteil bei einer solchen Luftführung durch die Wäsche W hindurch erreicht werden, dass diese Wäsche W möglicherweise auch bereits durch die Luftströmung etwas aufgelockert wird und die einströmende trockene Luft direkt und sehr gut bzw. sehr intensiv mit der feuchten Wäsche W in Kontakt kommt. So kann sie die aufgrund des Unterdrucks in der Trommel 142 verstärkt verdunstende Feuchtigkeit besser aufnehmen und abführen. Nach oben zu tritt die Luftströmung durch die Öffnungen 144b in den Bereich zwischen Trommelaufnahme 114 und Trommel 142 ein und wird dann von dem Lüfter 134 durch die Abluftöffnung 118 und die Ab-Luftführung 132 aus dem Wäschetrockner ausgeblasen.

Anhand der Fig. 1 ist auch leicht vorstellbar, wie die Erfindung bei einem einer erfindungsgemäßen Geschirrspülmaschine realisiert werden könnte. Hier wird eine Spülkammer als Behandlungskammer von der Trommelaufnahme 14 gebildet, eine bewegbare Trommel ist nicht vorgesehen. Öffnungen zum Einblasen von Luft sind vorhanden, beispielsweise an den Spülarmen, könnten aber ebenfalls über Drosselventile weitgehend oder ganz geschlossen werden, möglicherweise auch einstellbar. Eine Öffnung zum Absaugen von Luft entsprechend der Abluftöffnung 19 samt entsprechend leistungsstarkem Lüfter kann leicht vorgesehen werden, beispielsweise wie hier dargestellt an einer Decke der Spülkammer. Alternativ kann an einem Spülarm Luft eintreten, falls dies gewünscht sein sollte, und vor allem an einem anderen Spülarm Luft abgesaugt werden.

## Patentansprüche

1. Verfahren zum Betrieb eines wasserführenden Haushaltsgeräts wie eines Wäschetrockners (11) oder einer Geschirrspülmaschine um Gegenstände (W) darin zu trocknen, wobei das Haushaltsgerät aufweist:
- eine Behandlungskammer (14, 114) zur Behandlung von Gegenständen (W) darin, insbesondere um die Gegenstände darin zu trocknen,
- eine Luftführung (16, 18, 24, 32, 40, 116, 118, 124, 132) hin zu der Behandlungskammer (14, 114) und weg von der Behandlungskammer (14, 114),
- eine Gebläsevorrichtung (34, 134), die mit der Luftführung (16, 18, 24, 32, 40, 116, 118, 124, 132) verbunden ist, wobei ein Teil (18, 32, 118, 132) der Luftführung von der Behandlungskammer (14, 114) zu der Gebläsevorrichtung (34, 134) abgeht und von der Gebläsevorrichtung ein Teil (40) der Luftführung weitergeht,
wobei zu Beginn eines Trocknungsverfahrens für die Gegenstände (W) mittels der Gebläsevorrichtung (34, 134) in der Behandlungskammer (14, 114) ein Unterdruck gegenüber dem Außendruck erzeugt wird,
wobei ein Unterschied zwischen dem Unterdruck und dem Außendruck dynamisch zwischen 20 mbar und 800 mbar beträgt,
**dadurch gekennzeichnet, dass** als Beginn des Trocknungsverfahrens und während einer Anfangs-Phase des Trocknungsverfahrens für 30 Sekunden bis zu 10 Minuten nur mittels der Gebläsevorrichtung (34, 134) Luft aus der Behandlungskammer (14, 114) abgesaugt wird
ohne Bewegen der Behandlungskammer (14, 114) oder Aufheizen der Behandlungskammer (14, 114)
oder
mit Bewegen der Behandlungskammer (14, 114) mit maximaler Drehzahl von 10 U/min, wobei während der Anfangs-Phase oder daran anschließend Luft in die Behandlungskammer (14, 114) eingeblasen wird mit einem geringeren Volumenstrom als beim Absaugen,
wobei die Behandlungskammer (14, 114) mindestens eine Zuluftöffnung (16, 116) in der unteren Hälfte aufweist,
wobei ganz zu Beginn des Trocknungsverfahrens mit Absaugen von Luft aus der Behandlungskammer (14, 114) die zu trocknenden Gegenstände (W) Prallhindernisse bilden und so ein Einströmen von Luft durch die mindestens eine Zuluftöffnung (16, 116) in die Behandlungskammer (14, 114) erschweren oder abbremsen,
wobei die zu trocknenden Gegenstände (W) massiert nahe bei mindestens der Zuluftöffnung (16, 116) angeordnet sind und diese Zuluftöffnung in das Innere der Behandlungskammer (14, 114) zumindest teilweise abdecken.

2. Verfahren nach Anspruch 1, **dadurch gekennzeichnet, dass** der Unterschied zwischen dem Unterdruck und dem Außendruck dynamisch zwischen 60 mbar und 500 mbar beträgt.

3. Verfahren nach Anspruch 1 oder 2, **dadurch gekennzeichnet, dass** zu Beginn des Trocknungsverfahrens mittels der Gebläsevorrichtung (34, 134) keine Luft über die Luftführung (16, 18, 24, 32, 40, 116, 118, 124, 132) in die Behandlungskammer (14, 114) eingeblasen wird..

4. Verfahren nach Anspruch 3, **dadurch gekennzeichnet, dass** Luft, die mittels der Gebläsevorrichtung (34, 134) aus der Behandlungskammer (14, 114) abgesaugt wird, nach außen oder in eine Entfeuchtungsvorrichtung (29) in dem Haushaltsgerät eingeblasen wird.

5. Verfahren nach einem der vorhergehenden Ansprüche, **dadurch gekennzeichnet, dass** Luft in der oberen Hälfte der Behandlungskammer (14, 114) aus der Behandlungskammer abgesaugt wird, wobei vorzugsweise eine Abluftöffnung (18, 118) in den obersten 10% der Behandlungskammer (14, 114) angeordnet ist, und/oder dass Luft in die Behandlungskammer (14, 114) eingelassen wird oder mittels der Gebläsevorrichtung (34, 134) eingeblasen wird durch mindestens eine Zuluftöffnung (16, 116) in der unteren Hälfte der Behandlungskammer, wobei vorzugsweise die mindestens eine Zuluftöffnung (16, 116) in den untersten 10% der Behandlungskammer (14, 114) angeordnet ist.

6. Verfahren nach einem der vorhergehenden Ansprüche, **dadurch gekennzeichnet, dass** das Haushaltsgerät ein Wäschetrockner (11) ist mit einer Behandlungskammer in Form einer Trommelaufnahme (14, 114) und einer darin drehbaren Trommel (42, 142) mit Öffnungen (44, 144) an einer Mantelfläche (43, 143), wobei die zu trocknenden Gegenstände Wäschestücke (W) in der Trommel (42, 142) sind, wobei die Wäschestücke (W) ein Einströmen von Luft in die Trommel erschweren oder abbremsen, indem sie im unteren Bereich über mehreren Öffnungen (44, 144) in die Trommel (42, 142) hinein liegen und diese abdecken, wobei vorzugsweise die Trommel (142) nicht entlang der gesamten Mantelfläche (143) hinweg Öffnungen aufweist, sondern nur in einem oder zwei Mantelflächenbereichen Öffnungen (144) aufweist, die sich jeweils über einen Umfangswinkel von 10° bis 90° erstrecken, wobei während des Beginns des Trocknungsverfahrens die Trommel (142) in einer derartigen Drehstellung angeordnet ist, dass ein Mantelflächenbereich mit Öffnungen (144) den untersten Bereich der Trommel (142) bildet, wobei die Öffnungen (144) der Trommel (142) von Wäschestücken (W) abgedeckt werden.

7. Verfahren nach einem der vorhergehenden Ansprüche, **dadurch gekennzeichnet, dass** der Schritt des Herstellens eines relativen Druckunterschieds zwischen dem Unterdruck in der Behandlungskammer (14, 114) und dem Außendruck für bis zu 5 Minuten durchgeführt wird, wobei vorzugsweise nach dieser Dauer kein relativer Druckunterschied mehr erzeugt wird.

8. Verfahren nach einem der vorhergehenden Ansprüche, **dadurch gekennzeichnet, dass** der Schritt der Herstellens eines relativen Druckunterschieds zwischen dem Unterdruck in der Behandlungskammer (14, 114) und dem Außendruck für eine Dauer durchgeführt wird, bis eine durchschnittliche Feuchte der zu trocknenden Gegenstände (W) um 5% bis 25% reduziert worden ist, insbesondere 7% bis 15%, wobei vorzugsweise nach dieser Dauer kein relativer Druckunterschied mehr erzeugt wird.

9. Verfahren nach einem der Ansprüche 1 bis 7, **dadurch gekennzeichnet, dass** in einem an den Beginn des Trocknungsverfahrens anschließenden Dauerbetrieb des Haushaltsgeräts zum Trocknen der Gegenstände (W) ein relativer Druckunterschied in der Behandlungskammer (14, 114) zwischen dem Unterdruck darin und dem Außendruck außen herum eingehalten wird, vorzugsweise ein Druckunterschied von mindestens 10 mbar, insbesondere ein Druckunterschied bis zu 200 mbar.

10. Haushaltsgerät ausgebildet zur Durchführung des Verfahrens nach einem der vorhergehenden Ansprüche, **dadurch gekennzeichnet, dass** es eine Behandlungskammer (14, 114), eine Luftführung (16, 18, 24, 32, 40, 116, 118, 124, 132) hin zu der Behandlungskammer (14, 114) und weg von der Behandlungskammer sowie eine Gebläsevorrichtung (34, 134) in der Luftführung (16, 18, 24, 32, 40, 116, 118, 124, 132) aufweist, wobei die Behandlungskammer (14, 114) mindestens eine Zuluftöffnung (16, 116) in der unteren Hälfte aufweist.

11. Haushaltsgerät nach Anspruch 10, **dadurch gekennzeichnet, dass** das Haushaltsgerät eine Geschirrspülmaschine ist, wobei am Ende eines Geschirrspülvorgangs das Geschirr in der Behandlungskammer getrocknet wird, wobei vorzugsweise eine Zuluftöffnung in der Behandlungskammer vorgesehen ist.

12. Haushaltsgerät nach Anspruch 10, **dadurch gekennzeichnet, dass** das Haushaltsgerät ein Wäschetrockner (11) oder ein Waschtrockner ist mit einer drehbaren Trommel (42, 142) in einer festen Trommelaufnahme (14, 114), wobei die Trommelaufnahme die Behandlungskammer bildet, wobei eine Abluftöffnung (18, 118) der Luftführung (16, 18, 24, 32, 40, 116, 118, 124, 132) weg von der Behandlungskammer im oberen Bereich der Behandlungskammer angeordnet ist, insbesondere in der oberen Hälfte der Behandlungskammer, und eine Zuluftöffnung (16, 116) der Luftführung (16, 18, 24, 32, 40, 116, 118, 124, 132) hin zur Behandlungskammer in der unteren Hälfte der Behandlungskammer angeordnet ist, insbesondere in den untersten 10% der Behandlungskammer.

13. Haushaltsgerät nach Anspruch 10, **dadurch gekennzeichnet, dass** das Haushaltsgerät ein Wäschetrockner oder ein Waschtrockner ist mit einer drehbaren Trommel, wobei die Trommel die Behandlungskammer bildet, wobei eine Abluftöffnung der Luftführung weg von der Trommel im oberen Bereich der Trommel angeordnet ist, insbesondere in der oberen Hälfte der Trommel, und eine Zuluftöffnung der Luftführung hin zur Trommel in der unteren Hälfte der Trommel angeordnet ist, insbesondere in den unteren 10% der Trommel.

14. Haushaltsgerät nach einem der Ansprüche 10 bis 13, **dadurch gekennzeichnet, dass** in der Luftführung (16, 18, 24, 32, 40) hin zu der Behandlungskammer (14) ein Drosselventil (25) mit einem Abstand von weniger als 20 cm entlang der Luftführung (16, 18, 24, 32, 40) zu der Zuluftöffnung (16) oder der Behandlungskammer (14) vorgesehen ist, insbesondere ein einstellbares Drosselventil (25).

15. Haushaltsgerät nach einem der Ansprüche 10 bis 14, **dadurch gekennzeichnet, dass** die Gebläsevorrichtung (34, 134) entlang der Luftführung (16, 18, 24, 32, 40, 116, 118, 124, 132) näher an einer Absaugöffnung (18, 118) aus der Behandlungskammer (14, 114) als an einer Zuluftöffnung (16, 116) in die Behandlungskammer (14, 114) angeordnet ist, vorzugsweise um mindestens 10% näher, insbesondere 20% bis 50% näher.

## Claims

1. Method for operating a water-conducting domestic appliance such as a clothes dryer (11) or a dishwasher to dry items (W) therein, the domestic appliance comprising:
- a treatment chamber (14, 114) for treating items (W) therein, in particular to dry the items therein,
- an air duct (16, 18, 24, 32, 40, 116, 118, 124, 132) to and from the treatment chamber (14, 114),
- a blower device (34, 134) connected to the air duct (16, 18, 24, 32, 40, 116, 118, 124, 132), wherein a part (18 , 32, 118, 132) of the air duct leads from the treatment chamber (14, 114) to the blower device (34, 134) and a part (40) of the air duct continues from the blower device,
wherein at the start of a drying process for the items (W), a vacuum is generated in the treatment chamber (14, 114) with respect to the external pressure by means of the blower device (34, 134),
wherein a difference between the vacuum and the external pressure is between 20 mbar and 800 mbar dynamically,
**characterized in that**, at the start of the drying process and during an initial phase of the drying process, air is extracted from the treatment chamber (14, 114) for 30 seconds to 10 minutes only by means of the blower device (34, 134)
without moving the treatment chamber (14, 114) or heating the treatment chamber (14, 114)
or
with movement of the treatment chamber (14, 114) at a maximum speed of 10 rpm,
wherein during the initial phase or subsequently air is blown into the treatment chamber (14, 114) at a lower volumetric flow than during the suction,
wherein the treatment chamber (14, 114) has at least one air supply opening (16, 116) in the lower half,
wherein, at the very start of the drying process with air being sucked out of the treatment chamber (14, 114), the items (W) to be dried form baffle obstacles and thus impede or slow down the inflow of air through the at least one air supply opening (16, 116) into the treatment chamber (14, 114),
wherein the items (W) to be dried are arranged close to at least the air supply opening (16, 116) in a massed manner and at least partially cover said air supply opening in the interior of the treatment chamber (14, 114).

2. Method according to claim 1, **characterized in that** the difference between the reduced pressure and the external pressure is between 60 mbar and 500 mbar dynamically.

3. Method according to claim 1 or 2, **characterized in that** at the beginning of the drying method, no air is blown by means of the blower device (34, 134) via the air duct (16, 18, 24, 32, 40, 116, 118, 124, 132) into the treatment chamber (14, 114).

4. Method according to claim 3, **characterized in that** air, which is sucked out of the treatment chamber (14, 114) by means of the blower device (34, 134), is blown outwards or into a dehumidifying device (29) in the domestic appliance.

5. Method according to one of the preceding claims, **characterized in that** air in the upper half of the treatment chamber (14, 114) is sucked out of the treatment chamber, an exhaust air opening (18, 118) preferably being arranged in the uppermost 10% of the treatment chamber (14, 114), and/or **in that** air is admitted to the treatment chamber (14, 114) is admitted or blown in by means of the blower device (34, 134) through at least one air supply opening (16, 116) in the lower half of the treatment chamber, preferably with the at least one air supply opening (16, 116) being arranged in the lowermost 10% of the treatment chamber (14, 114).

6. Method according to one of the preceding claims, **characterized in that** the domestic appliance is a clothes dryer (11) having a treatment chamber in the form of a drum receptacle (14, 114) and a drum (42, 142) which can rotate therein and has openings (44, 144) on a circumferential surface (43, 143), the items to be dried being items of laundry (W) in the drum (42, 142), the items of laundry (W) impeding or slowing down an inflow of air into the drum by lying in the lower region over a plurality of openings (44, 144) into the drum (4 2, 142) and cover the latter, the drum (142) preferably not having openings along the entire circumferential surface (143), but only having openings (144) in one or two circumferential surface regions, which openings each extend over a circumferential angle of 10° to 90°, wherein during the start of the drying process, the drum (142) is arranged in a rotational position such that a shell surface area with openings (144) forms the lowermost area of the drum (142), wherein the openings (144) of the drum (142) are covered by items of laundry (W).

7. Method according to one of the preceding claims, **characterized in that** the step of establishing a relative pressure difference between the reduced pressure in the treatment chamber (14, 114) and the external pressure is carried out for up to 5 minutes, preferably after this duration no relative pressure difference being generated.

8. Method according to one of the preceding claims, **characterized in that** the step of creating a relative pressure difference between the reduced pressure in the treatment chamber (14, 114) and the external pressure is carried out for a duration until the average humidity of the items (W) to be dried has been reduced by 5% to 25%, in particular 7% to 15%, preferably after which the relative pressure difference is no longer generated.

9. Method according to one of claims 1 to 7, **characterized in that**, in a continuous operation of the domestic appliance for drying the items (W), following the start of the drying method, a relative pressure difference is maintained in the treatment chamber (14, 114) between the reduced pressure therein and the external pressure around it, preferably a pressure difference of at least 10 mbar, in particular a pressure difference of up to 200 mbar.

10. Domestic appliance designed to carry out the method according to one of the preceding claims, **characterized in that** it has a treatment chamber (14, 114), an air duct (16, 18, 24, 32, 40, 116, 118, 124, 132) to the treatment chamber (14, 114) and away from the treatment chamber and a blower device (34, 134) in the air duct (16, 18, 24, 32, 40, 116, 118, 124, 132), the treatment chamber (14, 114) having at least one air supply (16, 116) in the lower half.

11. Domestic appliance according to claim 10, **characterized in that** the domestic appliance is a dishwasher, the dishes being dried in the treatment chamber at the end of a dishwashing operation, preferably with an air supply opening being provided in the treatment chamber.

12. Domestic appliance according to claim 10, **characterized in that** the domestic appliance is a clothes dryer (11) or a washer-dryer with a rotatable drum (42, 142) in a fixed drum receptacle (14, 114), the drum receptacle forming the treatment chamber, an exhaust air opening (18, 118) of the air duct (16, 18, 24, 32, 40, 116, 118, 124, 132) away from the treatment chamber is arranged in the upper region of the treatment chamber, in particular in the upper half of the treatment chamber, and an air supply opening (16, 116) of the air duct (16, 18, 24, 32, 40, 116, 118, 124, 132) towards the treatment chamber is arranged in the lower half of the treatment chamber, in particular in the lowermost 10% of the treatment chamber.

13. Domestic appliance according to claim 10, **characterized in that** the domestic appliance is a laundry drier or a laundry drier and washing machine with a rotatable drum, the drum forming the treatment chamber, an exhaust air opening of the air duct away the drum is arranged in the upper region of the drum, in particular in the upper half of the drum, and an air supply opening of the air duct towards the drum is arranged in the lower half of the drum, in particular in the lower 10% of the drum.

14. Domestic appliance according to one of claims 10 to 13, **characterized in that** a throttle valve (25) is arranged in the air duct (16, 18, 24, 32, 40) to the treatment chamber (14) at a distance of less than 20 cm along the air duct (16, 18, 24, 32, 40) to the supply air opening (16) or the treatment chamber (14), in particular an adjustable throttle valve (25).

15. Domestic appliance according to one of claims 10 to 14, **characterized in that** the blower device (34, 134) is arranged along the air duct (16, 18, 24, 32, 40, 116, 118, 124, 132) closer to an extraction opening (18, 118) out of the treatment chamber (14, 114) than to a supply air opening (16, 116) into the treatment chamber (14, 114), preferably at least 10% closer, in particular 20% to 50% closer.

## Revendications

1. Procédé de fonctionnement d'un appareil ménager à eau, tel qu'un sèche-linge (11) ou un lave-vaisselle, pour y sécher des objets (W), l'appareil ménager comprenant :
- une chambre de traitement (14, 114) pour traiter des objets (W) dans celle-ci, en particulier pour sécher les articles dans celle-ci,
- un conduit d'air (16, 18, 24, 32, 40, 116, 118, 124, 132) vers la chambre de traitement (14, 114) et à partir de la chambre de traitement (14, 114),
- un dispositif de soufflage (34, 134) relié au conduit d'air (16, 18, 24, 32, 40, 116, 118, 124, 132), une partie (18, 32, 118, 132) du guide d'air partant de la chambre de traitement (14, 114) vers le dispositif de soufflage (34, 134) et une partie (40) du guide d'air continuant à partir du dispositif de soufflage,
dans lequel, au début d'un processus de séchage des objets (W), une dépression est créée dans la chambre de traitement (14, 114) par rapport à la pression extérieure au moyen du dispositif de soufflerie (34, 134),
une différence entre la dépression et la pression extérieure étant dynamiquement comprise entre 20 mbar et 800 mbar,
**caractérisé en ce que**, au début du processus de séchage et pendant une phase initiale du processus de séchage, pendant 30 secondes à 10 minutes, de l'air est aspiré hors de la chambre de traitement (14, 114) uniquement au moyen du dispositif de soufflage (34, 134).
sans déplacer la chambre de traitement (14, 114) ou chauffer la chambre de traitement (14, 114)
ou
en déplaçant la chambre de traitement (14, 114) à une vitesse de rotation maximale de 10 tr/min,
de l'air étant insufflé dans la chambre de traitement (14, 114) pendant la phase initiale ou après celle-ci, avec un débit volumétrique inférieur à celui de l'aspiration,
la chambre de traitement (14, 114) présentant au moins une ouverture d'amenée d'air (16, 116) dans la moitié inférieure,
dans lequel, tout au début du procédé de séchage avec aspiration d'air hors de la chambre de traitement (14, 114), les objets (W) à sécher forment des obstacles d'impact et rendent ainsi difficile ou freinent une entrée d'air dans la chambre de traitement (14, 114) par la au moins une ouverture d'alimentation en air (16, 116),
les objets (W) à sécher étant disposés en masse à proximité d'au moins l'ouverture d'amenée d'air (16, 116) et recouvrant au moins partiellement cette ouverture d'amenée d'air vers l'intérieur de la chambre de traitement (14, 114).

2. Procédé selon la revendication 1, **caractérisé en ce que** la différence entre la dépression et la pression extérieure est dynamiquement comprise entre 60 mbar et 500 mbar.

3. Procédé selon la revendication 1 ou 2, **caractérisé en ce qu'**au début du processus de séchage, aucun air n'est injecté dans la chambre de traitement (14, 114) au moyen du dispositif de soufflage (34, 134) via le conduit d'air (16, 18, 24, 32, 40, 116, 118, 124, 132).

4. Procédé selon la revendication 3, **caractérisé en ce que** l'air aspiré hors de la chambre de traitement (14, 114) au moyen du dispositif de soufflage (34, 134) est injecté à l'extérieur ou dans un dispositif de déshumidification (29) dans l'appareil ménager.

5. Procédé selon l'une quelconque des revendications précédentes, **caractérisé en ce que** de l'air est aspiré hors de la chambre de traitement (14, 114) dans la moitié supérieure de la chambre de traitement, de préférence une ouverture d'évacuation d'air (18, 118) étant disposée dans les 10% supérieurs de la chambre de traitement (14, 114), et/ou **en ce que** de l'air est introduit dans la chambre de traitement (14, 114) est admis ou injecté au moyen du dispositif de soufflage (34, 134) à travers au moins une ouverture d'alimentation en air (16, 116) dans la moitié inférieure de la chambre de traitement, de préférence ladite au moins une ouverture d'alimentation en air (16, 116) étant située dans les 10% les plus bas de la chambre de traitement (14, 114).

6. Procédé selon l'une quelconque des revendications précédentes, **caractérisé en ce que** l'appareil ménager est un sèche-linge (11) comprenant une chambre de traitement sous la forme d'un logement de tambour (14, 114) et un tambour (42, 142) pouvant tourner à l'intérieur de celui-ci et comportant des ouvertures (44, 144) sur une surface d'enveloppe (43, 143), les objets à sécher étant des pièces de linge (W) dans le tambour (42, 142), les pièces de linge (W) rendant difficile ou freinant une entrée d'air dans le tambour, **en ce qu'**elles se trouvent dans la zone inférieure au-dessus de plusieurs ouvertures (44, 144) dans le tambour (42, 142) et le recouvrent, de préférence, le tambour (142) ne présentant pas d'ouvertures le long de toute la surface d'enveloppe (143), mais présentant des ouvertures (144) uniquement dans une ou deux zones de surface d'enveloppe, qui s'étendent chacune sur un angle périphérique de 10° à 90°, le tambour (142) étant disposé, pendant le début du processus de séchage, dans une position de rotation telle qu'une zone de surface d'enveloppe avec des ouvertures (144) forme la zone la plus basse du tambour (142), les ouvertures (144) du tambour (142) étant recouvertes par des pièces de linge (W).

7. Procédé selon l'une quelconque des revendications précédentes, **caractérisé en ce que** l'étape d'établissement d'une différence de pression relative entre la dépression dans la chambre de traitement (14, 114) et la pression extérieure est mise en oeuvre pendant une durée allant jusqu'à 5 minutes, de préférence après cette durée, aucune différence de pression relative n'est plus établie.

8. Procédé selon l'une quelconque des revendications précédentes, **caractérisé en ce que** l'étape d'établissement d'une différence de pression relative entre la dépression dans la chambre de traitement (14, 114) et la pression extérieure est réalisée pendant une durée telle qu'une humidité moyenne des objets (W) sécher a été réduite de 5% à 25%, notamment de 7% à 15%, de préférence après cette durée plus aucune différence de pression relative n'est générée.

9. Procédé selon l'une quelconque des revendications 1 à 7, **caractérisé en ce que**, lors d'un fonctionnement continu de l'appareil ménager pour le séchage des objets (W) suivant le début du procédé de séchage, une différence de pression relative est maintenue dans la chambre de traitement (14, 114) entre la dépression à l'intérieur de celle-ci et la pression extérieure à l'extérieur, de préférence une différence de pression d'au moins 10 mbar, en particulier une différence de pression pouvant atteindre 200 mbar.

10. Appareil ménager adapté pour mettre en oeuvre le procédé selon l'une quelconque des revendications précédentes, **caractérisé en ce qu'**il comprend une chambre de traitement (14, 114), un conduit d'air (16, 18, 24, 32, 40, 116, 118, 124, 132) vers et depuis la chambre de traitement (14, 114), et un dispositif de soufflage (34, 134) dans le conduit d'air (16, 18, 24, 32, 40, 116, 118, 124, 132), la chambre de traitement (14, 114) comprenant au moins une ouverture d'amenée d'air (16, 116) dans sa moitié inférieure.

11. Appareil ménager selon la revendication 10, **caractérisé en ce que** l'appareil ménager est un lave-vaisselle, dans lequel, à la fin d'un cycle de lavage de la vaisselle, la vaisselle est séchée dans la chambre de traitement, une ouverture d'alimentation en air étant de préférence prévue dans la chambre de traitement.

12. Appareil ménager selon la revendication 10, **caractérisé en ce que** l'appareil ménager est un sèche-linge (11) ou un lave-linge séchant avec un tambour rotatif (42, 142) dans un logement de tambour fixe (14, 114), le logement de tambour formant la chambre de traitement, une ouverture d'évacuation (18, 118) du conduit d'air (16, 18, 24, 32, 40, 116, 118, 124, 132) est disposée à l'écart de la chambre de traitement dans la partie supérieure de la chambre de traitement, en particulier dans la moitié supérieure de la chambre de traitement, et une ouverture d'alimentation en air (16, 116) du conduit d'air (16, 18, 24, 32, 40, 116, 118, 124, 132) vers la chambre de traitement est disposée dans la moitié inférieure de la chambre de traitement, en particulier dans les 10% les plus bas de la chambre de traitement.

13. Appareil ménager selon la revendication 10, **caractérisé en ce que** l'appareil ménager est un sèche-linge ou un lave-linge séchant comprenant un tambour rotatif, le tambour formant la chambre de traitement, une ouverture d'évacuation du conduit d'air s'éloignant du tambour étant disposée dans la partie supérieure du tambour, notamment dans la moitié supérieure du tambour, et une ouverture d'admission du conduit d'air vers le tambour étant disposée dans la moitié inférieure du tambour, notamment dans les 10% inférieurs du tambour.

14. Appareil ménager selon l'une des revendications 10 à 13, **caractérisé en ce qu'**il est prévu dans le conduit d'air (16, 18, 24, 32, 40) vers la chambre de traitement (14) un clapet d'étranglement (25) situé à une distance inférieure à 20 cm le long du conduit d'air (16, 18, 24, 32, 40) vers l'ouverture d'amenée d'air (16) ou la chambre de traitement (14), notamment un clapet d'étranglement réglable (25).

15. Appareil ménager selon l'une des revendications 10 à 14, **caractérisé en ce que** le dispositif de soufflage (34, 134) est disposé le long du conduit d'air (16, 18, 24, 32, 40, 116, 118, 124, 132) plus près d'une ouverture d'aspiration (18, 118) de la chambre de traitement (14, 114) que d'une ouverture d'amenée d'air (16, 116) dans la chambre de traitement (14, 114), de préférence plus près d'au moins 10%, notamment plus près de 20% à 50%.
